# EUROPEAN PATENT APPLICATION

(11) **EP 4 450 466 A1**
(43) Date of publication of application: **23.10.2024**
(21) Application number: 24171008.6
(22) Date of filing: 18.04.2024
(51) Int. Cl.: C02F 3/34, C02F 3/30

(54) **ELECTRON DONOR CYCLIC SULFUR DENITRIFICATION AGENT**

(30) Priority: 19.04.2023 KR 20230051354; 29.02.2024 KR 20240029395
(71) Applicant: KNU-Industry Cooperation Foundation, Chuncheon-si, Gangwon-do 24341 (KR)
(72) Inventor: OH, Sang Eun, Chuncheon-si, Gangwon-do (KR); KIM, Seung Gyu, Chuncheon-si, Gangwon-do (KR); ANUP, Gurung, Chuncheon-si, Gangwon-do (KR); KANG, Woo Chang, Chuncheon-si, Gangwon-do (KR)
(74) Representative: BCKIP Part mbB

(57) **Abstract**

Provided is an electron donor cyclic sulfur denitrification agent including sulfur (S°) particles; any one iron sulfide particles or a mixture of two or more iron sulfide particles selected from a group of iron sulfide particles including Fe₂S₃ particles, FeS particles, and FeS₂ particles; iron hydroxide (Fe(OH)₃) particles; sulfur oxidizing denitrifying bacteria; and sulfate reducing bacteria. In the electron donor cyclic sulfur denitrification agent of the present invention, since sulfur circulates through reactions in the forms of iron sulfide (an electron donor for denitrification) and iron hydroxide (adsorbent of H₂S) by sulfur oxidizing denitrifying bacteria and sulfate reducing bacteria, it has an advantage of maintaining denitrification activity for a longer time by minimizing the replenishment of additional electron donors as compared with the denitrification reaction using sulfur (S⁰) in the related art. In addition, with respect to the electron donor cyclic sulfur denitrification agent of the present invention, when the sulfate ion generated during the sulfate denitrification is converted to the hydrogen sulfide by the sulfate reducing bacteria (SRB), the iron hydroxide (Fe(OH)₃) chemically adsorbs and removes these substances, so that it has an advantage in that there is no odor caused by the hydrogen sulfide. In addition, the electron donor cyclic sulfur denitrification agent of the present invention reuses hydrogen ions generated during the S° denitrification reaction, minimizing the consumption of the alkalinity, so that it has an advantage of maintaining denitrification activity for a longer period of time than the denitrification reaction using only sulfur as a sole electron donor in the related art. Therefore, by using the electron donor cyclic sulfur denitrification agent of the present invention, it is expected that a stable denitrification reaction can be performed without generating odor and minimizing the supply of additional electron donors and the alkalinity.

## Description

This application is based upon and claims the benefit of priority from Korean Patent Application No. 10-2024-0029395 filed February 29, 2024 claiming priority of KR application No. 10-2023-0051354 filed on April 19, 2023.

### Technical Field

The present invention relates to an electron donor cyclic sulfur denitrification agent and, particularly, to an electron donor cyclic sulfur denitrification agent containing the sulfur (S°) particles; any one iron sulfide particles or a mixture of two or more iron sulfide particles selected from a group of the iron sulfide particles including the Fe₂S₃ particles, the FeS particles, and the FeS₂ particles; iron hydroxide (Fe(OH)₃) particles; sulfur oxidizing denitrifying bacteria; and sulfate reducing bacteria.

### Background

Nitrate nitrogen (NO)₃⁻-N) is a toxic substance that not only causes cyanosis in infants but also causes cancer, so that an amount contained in treated water discharged is strictly controlled in accordance with strict national water quality standards. For example, in groundwater, the nitrate ion (NO₃⁻) content is limited to less than 20 mg/l, and in drinking water, the nitrate ion (NO₃⁻) content is limited to less than 10 mg/l. Methods for denitrifying and removing nitrate ions contained in contaminated water include a heterotrophic denitrification method and an autotrophic denitrification method. The heterotrophic denitrification method is a method of denitrifying the nitrate ions (NO₃⁻) into the nitrogen gas (N₂) under anoxic conditions by using sewage organic substances (carbon source). The heterotrophic denitrification method has a disadvantage of being uneconomical and generating a large amount of sludge because the injection of organic substances such as methanol is required when treating sewage with a low C/N ratio. In contrast, since the autotrophic denitrification method uses various inorganic substances as the electron donors, injection of organic substances is not required. Specifically, in the autotrophic denitrification method, sulfur oxidizing denitrifying bacteria uses sulfur as the electron donors to denitrify nitrate ions (NO₃⁻) into the nitrogen gas (N₂). However, there is a problem in that, in the autotrophic denitrification method, sulfur is oxidized by the sulfur oxidizing denitrifying bacteria during the denitrification process, converted to the sulfate ions (SO₄²⁻), and hydrogen ions are generated, so that the alkalinity of the treated water is reduced, and the denitrification efficiency is reduced. In addition, there is a problem in that sulfate ions generated during the denitrification process are converted to the hydrogen sulfide (H₂S) by the sulfate-reducing bacteria, causing a bad odor.

By reacting mine sludge containing a large amount of iron with an aqueous alkaline solution (Ca(OH)₂, etc.), iron hydroxide (Fe(OH)₃) particles are obtained. The iron hydroxide particles have the effect of chemically adsorbing hydrogen sulfide, so that the iron hydroxide particles are used as a desulfurization adsorbent for an exhaust gas. When the iron hydroxide (Fe(OH)₃) particles adsorb the hydrogen sulfide, the iron hydroxide particles are converted to the iron sulfide (one or more of the Fe₂S₃, the FeS, and the FeS₂) particles, and the adsorption performance of the hydrogen sulfide is decreased, so that the iron hydroxide (Fe(OH)₃) particles have been landfilled and disposed of as a waste desulfurization adsorbent. The iron sulfide (one or more of the Fe₂S₃, the FeS, and the FeS₂) is used as the electron donors and can be used in a denitrification reaction by the sulfur oxidizing denitrifying bacteria. Recently, research has been conducted on recycling the discarded waste desulfurization adsorbent and recycling as a sulfur denitrification agent.

The waste desulfurization adsorbent contains CaCO₃ in addition to iron sulfide (one or more of the Fe₂S₃, the FeS, and the FeS₂), which acts as the electron donors by the sulfur oxidizing denitrifying bacteria and consumes hydrogen ions while being used in the denitrification process, so that the pH does not decrease, and there is an advantage of maintaining the alkalinity. In addition, when a denitrification process is performed by using the iron sulfide (one or more of the Fe₂S₃, the FeS, and the FeS₂) particles contained in the waste desulfurization adsorbent, the specific surface area is large due to pores and microcracks generated during the adsorption process of the hydrogen sulfide, and it acts as a favorable environment for the sulfur oxidizing denitrifying bacteria to attach and grow, and there is an advantage of excellent denitrification efficiency.

However, when only the iron sulfide (one or more of the Fe₂S₃, the FeS, and the FeS₂) is applied to the denitrification reaction, the electron donor contained in the iron sulfide is oxidized to the sulfate ion and is released, that is, all of the sulfur in the iron sulfide (one or more of the Fe₂S₃, the FeS, and the FeS₂) are consumed to become the iron hydroxide (Fe(OH)₃), the denitrification efficiency by the sulfur oxidizing denitrifying bacteria is decreased, so that there is the inconvenience of having to periodically replace the iron sulfide. Patent Literatures and references mentioned herein are incorporated by reference to the same extent as if each of individual Literatures is individually and specifically identified by reference.

### Patent Literature

Korean Patent Application Publication No. 10-2005-0083703
Korean Patent Application Publication No. 10-2001-0004073

### Non-patent Literature

Davydov A, Chuan K.T. and Sanger A.R. (1998). Mechanism of H2S Oxidation by the Ferric Oxide and Hydroxide Surfaces. J. Phys. Chem. B, 102, 4745-4752.
Kattner J.E., Samuels A. and Wendt R.P. (1988). Resolution of problems with iron oxide slurry process for removal of H2S from natural gas-case history, Eva O'Byrne Gas Unit, Upshur County, Texas. J. Petrl. Technol. 1988, 1237-1243.
Raabe Toni, Erler Ronny, Kureti Sven and Krause Harmut (2014). Oxygen Removal during the biogas Upgrading using iron-based Adsorbents. Energy with Future, Environment, and Responsibility, International Gas Union Research Conference-WP5-6.
Torrento C., Cama J., Urmeneta J., Otero N and Soler Albert (2010). Denitrification of groundwater with pyrite and Thiobacillus denitrificans. Chemical Geology, 278, 80-91.
Li R.H., Morrison L., Collins G., Li A and Zhan X (2016). Simultaneous nitrate and phosphate removal from wastewater lacking organic matter through microbial oxidation of pyrrhotite coupled to nitrate reduction. Water Research 96, 32-41.

In order to compensate for the shortcomings of a method of denitrification by using the sulfur (S°) particles or iron sulfide as the electron donors in the related art, the present invention provides an electron donor cyclic sulfur denitrification agent including: sulfur (S°) particles; any one iron sulfide particles or a mixture of two or more iron sulfide particles selected from a group of the iron sulfide particles including the Fe₂S₃ particles, the FeS particles, and the FeS2 particles; iron hydroxide (Fe(OH)₃) particles; sulfur oxidizing denitrifying bacteria; and sulfate reducing bacteria.

In the electron donor cyclic sulfur denitrification agent of the present invention,
Since the sulfur is circulated through an internal reaction during the denitrification process by the sulfur oxidizing denitrifying bacteria in the electron donor,
A decrease in denitrification efficiency due to the consumption of the electron donors can be alleviated, and
since the hydrogen ions generated during the denitrification process by the sulfur oxidizing denitrifying bacteria using the sulfur particles and iron sulfide particles are consumed during the denitrification process by the sulfur oxidizing denitrifying bacteria using iron sulfide particles, there is an advantage in that the decrease in denitrification efficiency due to a decrease in alkalinity is alleviate. In addition, when the sulfate ion generated during the sulfur oxidation denitrification is converted to the hydrogen sulfide by the sulfate reducing bacteria (SRB), the iron hydroxide (Fe(OH)₃) chemically reacts in adsorption of these substances at a high rate to become the iron sulfide, so that it has an advantage in that there is no odor caused by the hydrogen sulfide.

Other objects and technical features of the present invention are presented in more detail by the following detailed description, claims, and drawings.

### SUMMARY OF THE INVENTION

The present invention provides an electron donor cyclic sulfur denitrification agent including: sulfur (S°) particles; any one iron sulfide particles or a mixture of two or more iron sulfide particles selected from a group of the iron sulfide particles including the Fe₂S₃ particles, the FeS particles, and the FeS₂ particles; iron hydroxide (Fe(OH)₃) particles; sulfur oxidizing denitrifying bacteria; and sulfate reducing bacteria.

There is a characteristic in that the sulfur (S°) particles are converted to the sulfate ions (SO₄²⁻) by the sulfur oxidizing denitrifying bacteria used as the electron donors in the process of decomposing the nitrate ions (NO₃⁻) into the nitrogen gas (N₂) ; the sulfate ion (SO₄²⁻) is converted to the hydrogen sulfide (H₂S) by the sulfate reducing bacteria; the hydrogen sulfide (H₂S) reacts with the iron hydroxide (Fe(OH)₃) particles to be converted to the sulfur (S°) particles and the FeS particles; the sulfur (S°) particles and the FeS particles react to be converted to the FeS₂ particles; and with respect to the sulfur (S°) particles, the FeS particles, and the FeS₂ particles, use the sulfur oxidizing denitrifying bacteria are used as the electron donors in the process of decomposing the nitrate ions (NO₃⁻) into the nitrogen gas (N₂).

There is a characteristic in that the Fe₂S₃ particles are converted to the FeS particles or the FeS₂ particles, any one iron sulfide particles selected from a group of the iron sulfide particles including the converted FeS particles and the converted FeS₂ particles or a mixture of the iron sulfide particles thereof are converted to the sulfate ions (SO₄²⁻) particles and the iron hydroxide (Fe(OH)₃) particles.

The mixture is used as the electron donors in the process of the sulfur oxidizing denitrifying bacteria decomposing the nitrate ions (NO₃⁻) into the nitrogen gas (N₂). The sulfate ion (SO₄²⁻) is decomposed into the sulfur ion (HS⁻) by the sulfate reducing bacteria and then converted to the hydrogen sulfide (H₂S); the hydrogen sulfide (H₂S) reacts with the iron hydroxide (Fe(OH)₃) particles to be converted to the sulfur (S°) particles and the FeS particles; the sulfur (S°) particles and the FeS particles react to be converted to the FeS₂ particles; The sulfur (S°) particles, the FeS particles, and there is a characteristic in that the sulfur oxidizing denitrifying bacteria are used as the electron donors in the process of decomposing the nitrate ions (NO₃⁻) into the nitrogen gas (N₂).

One iron sulfide particle or a mixture of two or more iron sulfide particles selected from a group of the iron sulfide particles including the FeS particles and the FeS₂ particles is a process in which the sulfur oxidizing denitrifying bacteria decompose the nitrate ions (NO₃⁻) into the nitrogen gas (N₂). It is used as the electron donors to be converted to the sulfate ion (SO₄²⁻) and the iron hydroxide (Fe(OH)₃) particles; the sulfate ion (SO₄²⁻) is decomposed into the sulfur ion (HS⁻) by the sulfate reducing bacteria and then converted to the hydrogen sulfide (H₂S); the hydrogen sulfide (H₂S) reacts with the iron hydroxide (Fe(OH)₃) particles to be converted to the sulfur (S°) particles and the FeS particles; the sulfur (S°) particles and the FeS particles react to be converted to the FeS₂ particles; the sulfur (S°) particles, the FeS particles, and the FeS2 particles are the sulfur oxidizing denitrifying bacteria are used as the electron donors in the process of decomposing the nitrate ions (NO₃⁻) into the nitrogen gas (N₂).

There is a characteristic in that hydrogen ion (H⁺) generated in the process of decomposing the nitrate ions (NO₃⁻) into the nitrogen gas (N₂) by using the sulfur (S°) particles as the electron donors is the sulfur oxidizing denitrifying bacteria. Using the FeS₂ particles as an electron donor, hydrogen ions (H⁺) are consumed in the process of decomposing the nitrate ions (NO₃⁻) into the nitrogen gas (N₂), or the sulfur oxidizing denitrifying bacteria use the FeS₂ particles as the electron donors in the process of denitrification by the reduction of pH and the alkalinity being alleviated by the generated iron hydroxide (Fe(OH)₃) particles.

There is a characteristic in that the sulfur (S°) particles; any one iron sulfide particles or a mixture of two or more iron sulfide particles selected from a group of the iron sulfide particles including the Fe₂S₃ particles, the FeS particles, and the FeS₂ particles and the iron hydroxide (Fe(OH)₃) particles can be mixed with a binder to be generated in a pellet form, and the binder is any one selected from a group including silica sol, modified silicate, clay, and bentonite a mixture thereof.

Since the iron sulfide particle mixture and the mixture of iron compound particle mixture are circulated by H₂S generated by the sulfate reducing bacteria, there is a characteristic in that electron donor cyclic sulfur denitrification agent can contain one or both of the iron sulfide particle mixture and the mixture of iron compound particle mixture.

The present invention provides a column for water treatment filled with the electron donor cyclic sulfur denitrification agent, and the column is of an upflow type.

The present invention provides a method of manufacturing an electron donor cyclic sulfur denitrification agent, including: a first step of generating any one iron sulfide particles or a mixture of two or more iron sulfide particles selected from a group of the iron sulfide particles including the Fe₂S₃ particles, the FeS particles, and the FeS₂ particles; and a mixture of iron compound particles containing iron hydroxide (Fe(OH)₃) particles; a second step of mixing the sulfur (S°) particles and a mixture of iron compound particles to generate a mixture of sulfur (S⁰)-iron compound particles; and a third step of generating an electron donor cyclic sulfur denitrification agent by inoculating a mixture of sulfur (S⁰)-iron compound particles with the sulfur oxidizing denitrifying bacteria and the sulfate reducing bacteria.

The sulfur (S⁰)-iron compound particle mixture can be immobilized into the sulfur (S°)-iron compound particle mixture pellets using a binder, and the sulfur particles and a mixture of iron compound particles pellets can be filled in a water treatment column. The binder is any one binder selected from a group including silica sol, modified silicate, clay, and bentonite, or a mixture thereof.

When a large amount of the alkalinity is needed by treating a mixture of sulfur (S°)-iron compound particles with a high concentration of the nitrate nitrogen, the alkalinity can be supplied by adding calcium carbonate (CaCO₃) or waste shell powder containing it to the circulating denitrification agent It is characterized by being able to In the mixture of sulfur (S⁰)-iron compound particles, the sulfur (S°) particles and a mixture of iron compound particles are mixed with 0.5 to 5: 1 by weight ratio, and inoculation of the sulfur oxidizing denitrifying bacteria and the sulfate reducing bacteria use any one or two mixtures selected from a group including aerobic sludge in sewage treatment plants, basic sludge in the sewage treatment plants, and soil microorganisms.

The present invention relates to an electron donor cyclic sulfur denitrification agent including sulfur (S°) particles; any one iron sulfide particles or a mixture of two or more iron sulfide particles selected from a group of the iron sulfide particles including the Fe₂S₃ particles, the FeS particles, and the FeS₂ particles; the iron hydroxide (Fe(OH)₃) particles; the sulfur oxidizing denitrifying bacteria; and the sulfate reducing bacteria.

In the electron donor cyclic sulfur denitrification agent of the present invention, since sulfur which is an electron donor is circulated through an internal reaction in a denitrification reaction process by sulfur oxidizing denitrifying bacteria, it has an advantage of maintaining denitrification activity for a long time by minimizing the replenishment of additional electron donors compared with a denitrification reaction using the sulfur oxidizing denitrifying bacteria in the related art. In addition, with respect to the electron donor cyclic sulfur denitrification agent of the present invention, when the sulfate ion generated during the sulfate denitrification is converted to the hydrogen sulfide by the sulfate reducing bacteria (SRB), the iron hydroxide (Fe(OH)₃) chemically adsorbs and removes these substances, so that it has an advantage in that there is no odor caused by the hydrogen sulfide.

In addition, the electron donor cyclic sulfur denitrification agent of the present invention reuses hydrogen ions generated during the denitrification reaction process of the sulfur oxidizing denitrifying bacteria, minimizing the consumption of the alkalinity due to consumed or generated iron hydroxide (Fe(OH)₃) particles, so that it has an advantage of maintaining denitrification activity for a longer period of time than the denitrification reaction using the sulfur oxidizing denitrifying bacteria in the related art.

Therefore, by using the electron donor cyclic sulfur denitrification agent of the present invention, it is expected that a stable denitrification reaction can be performed without generating odor and minimizing the supply of additional electron donors and the alkalinity.

### Brief Description of Drawings

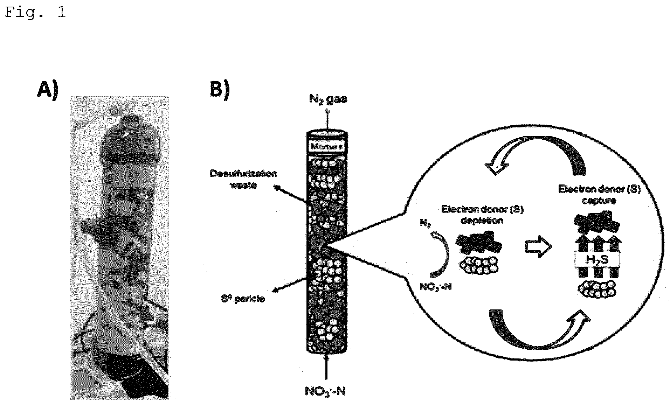

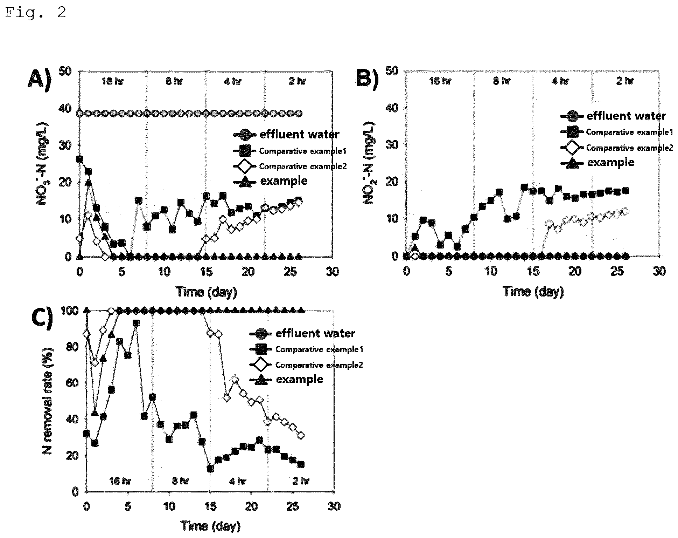

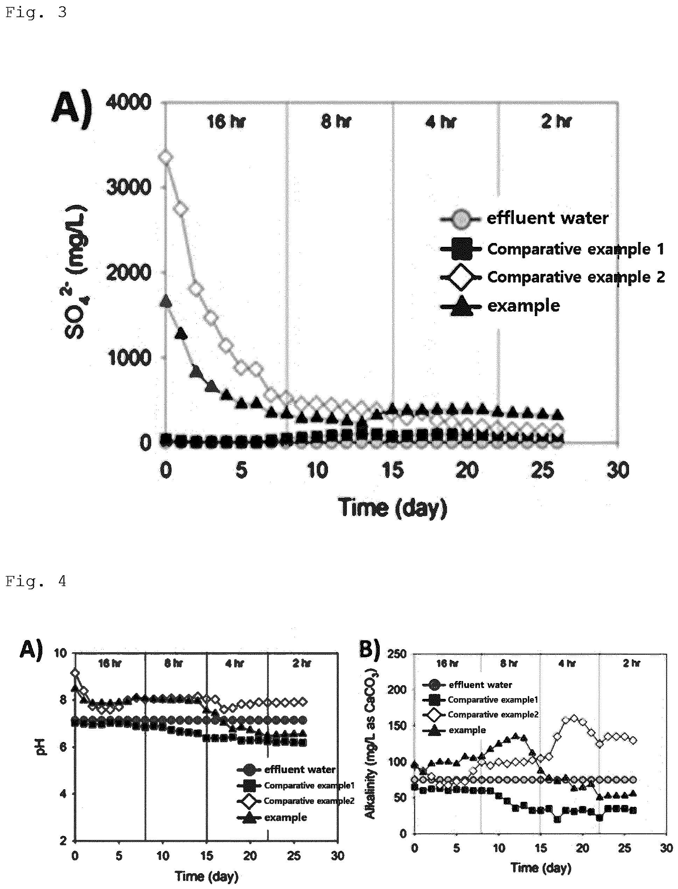

Fig. 1 is a diagram schematically illustrating a water treatment column filled with an electron donor cyclic sulfur denitrification agent according to the present invention; Fig. 2 is a diagram illustrating results of measuring a concentration of the nitrate nitrogen in the effluent water from a sulfur denitrification agent column of the present invention; Fig. 3 is a diagram illustrating results of measuring a concentration of sulfate ions (SO₄²⁻) and an electrical conductivity (EC) in the effluent water from the sulfur denitrification agent column of the present invention; and
Fig. 4 is a diagram illustrating results of measuring pH and the alkalinity in the effluent water from the sulfur denitrification agent column of the present invention.

### Description of Embodiments

The present invention provides an electron donor cyclic sulfur denitrification agent containing the sulfur (S°) particles; any one iron sulfide particles or a mixture of two or more iron sulfide particles selected from a group of the iron sulfide particles including the Fe₂S₃ particles, the FeS particles, and the FeS₂ particles; iron hydroxide (Fe(OH)₃) particles; sulfur oxidizing denitrifying bacteria; and sulfate reducing bacteria.

In the present invention, sulfur (S°) particles; the FeS particles; and any one iron sulfide particle or a mixture of two or more iron sulfide particles selected from a group of the iron sulfide particles including the FeS₂ particles are used as the electron donors during the autotrophic denitrification by the sulfur oxidizing denitrifying bacteria.

In addition, in the present invention, the Fe₂S₃ particles are converted to the FeS particles or the FeS₂ particles, and any one iron sulfide particle or a mixture of two or more iron sulfide particles selected from a group of the iron sulfide particles including the converted FeS particles and the FeS₂ particles is used as the electron donors during the autotrophic denitrification by the sulfur oxidizing denitrifying bacteria.

With respect to the sulfur (S°) particles, by using the sulfur oxidizing denitrifying bacteria as the electron donors to decompose the nitrate ions (NO₃⁻) into the nitrogen gas (N₂), and during the denitrification reaction, the sulfur (S°) particles are oxidized to the sulfate ions (SO₄²⁻), and hydrogen ions (H⁺) are generated (refer to Chemical Formula 1).

[Chemical Formula 1] NO₃⁻ + 0.835 S⁰ + 0.334H₂0 -> 0.5N₂ + 0.835SO₄²⁻ + 0.665H⁺

With respect to one iron sulfide particle or a mixture of two or more iron sulfide particles selected from a group of the iron sulfide particles including the FeS particles and the FeS₂ particles (including the FeS particles or the FeS₂ particles converted from the Fe₂S₃ particles), the sulfur oxidizing denitrifying bacteria is used as the electron donors to decompose the nitrate ions (NO₃⁻) into the nitrogen gas (N₂), and during the denitrification reaction, one iron sulfide particle or a mixture of two or more iron sulfide particles selected from a group of the iron sulfide particles including the FeS particles and the FeS₂ particles (including the FeS particles or the FeS₂ particles converted from the Fe₂S₃ particles) is oxidized with sulfate ion (SO₄²⁻), so that iron hydroxide (Fe(OH)₃) is generated. The iron hydroxide (Fe(OH)₃) generated at this time is precipitated and dissolved again when the pH drops, which has the effect of preventing a decrease in alkalinity and a decrease in pH.

The decomposition of the nitrate ions (NO₃⁻) by any one iron sulfide particle or a mixture of two or more iron sulfide particles selected from a group of the iron sulfide particles including the sulfur oxidizing denitrifying bacteria and the FeS particles and the FeS₂ particles (including the FeS particles converted from the Fe₂S₃ particles or the FeS₂ particles) or a mixture of two or more iron sulfide particles is explained by the following Chemical Formulas 2 to 6. The Fe₂S₃ is unstable to be converted to the Fe₃S₄ and the FeS₂ (Kattner et al., 1988; Chemical Formula 2) can be converted to the FeS and the FeS₂ (Torrento et al., 2010; Li et al., 2016; Chemical Formula 3)

[Chemical Formula 2] 2Fe₂S₃→ Fe₃S₄+FeS₂

[Chemical Formula 3] Fe₂S₃→ FeS+FeS₂

[Chemical Formula 4] 10FeS+13NO₃⁻+6H₂O→10SO₄²⁻9N₂↑+2H⁺+10Fe(OH)₃↓

[Chemical Formula 5] 5FeS₂+15NO₃⁻+10H₂O→10SO₄²⁻+15/2N₂↑+5H⁺+5Fe(OH)₃↓

[Chemical Formula 6] 5FeS₂+14NO₃⁻+4H⁺→10SO₄²⁻+7N₂↑+5Fe²⁺+2H₂O

The denitrification reaction by the sulfur oxidizing denitrifying bacteria using the sulfur (S°) particles; and any one iron sulfide particle or a mixture of two or more iron sulfide particles selected from a group of the iron sulfide particles including the FeS particles and the FeS₂ particles (including the FeS particles of the FeS₂ particles converted from the Fe₂S₃ particles) as the electron donors may proceed simultaneously or sequentially.

The decomposition process of the nitrate ions (NO₃⁻) by the sulfur oxidizing denitrifying bacteria and the FeS or the FeS₂ can generate the hydrogen ions (H⁺), and the hydrogen ions (H⁺) can cause a decrease in pH and alkalinity. However, in the present invention, since the hydrogen ions (H⁺) are reused in the denitrification reaction using the FeS₂ as an electron donor, a decrease in pH and alkalinity due to accumulation of the hydrogen ions (H⁺) has the effect of being alleviated.

In addition, there is a characteristic in that, in the present invention, the problems of a decrease in pH and a decrease in alkalinity caused by the denitrification reaction are solved by using the sulfate reducing bacteria. The sulfate reducing bacteria use organic matter in water to generate sulfur ion (HS⁻) using the sulfate ion (SO₄²⁻) and hydrogen ion (H⁺). And the sulfur ion (HS⁻) is hydrogen ion to become hydrogen sulfide (H₂S). In addition, the hydrogen sulfide (H₂S) reacts with iron hydroxide (Fe(OH)₃) particles to form the FeS and S, and the FeS and S can become the FeS₂ (refer to Chemical Formulas 8 to 11).

Therefore, the hydrogen ion (H⁺) generated in the denitrification reaction of the present invention is reused for the production of sulfur ion by the sulfate reducing bacteria and the production reaction of the hydrogen sulfide by the sulfur ion, so that the hydrogen ion is not accumulated.

In addition, the precipitated iron hydroxide (Fe(OH)₃) dissolves again when the pH drops, the hydrogen ion (H⁺) is consumed, so that pH decrease can be prevented. When a large amount of the alkalinity is required by treating a high concentration of the nitrate nitrogen, the alkalinity can be supplied by adding calcium carbonate (CaCO₃) or waste shell particle containing calcium carbonate.

[Chemical Formula 8] SO₄²⁻+8e⁻+9H⁺→HS⁻+4H₂O

[Chemical Formula 9] HS⁻+H⁺

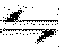 H₂S

[Chemical Formula 10] 2Fe(OH)₃+3H₂→2FeS+S⁰+6H₂O

[Chemical Formula 11] FeS+S⁰→FeS₂

In summary, when the electron donor cyclic sulfur denitrification agent of the present invention is used,
the sulfate ion (SO₄²⁻) generated during the denitrification process is converted to the sulfur ion (HS⁻) by sulfate reducing bacteria; the sulfur ion (HS⁻) reacts with the hydrogen ion (H⁺) generated during the denitrification process is converted to the hydrogen sulfide (H₂S); the hydrogen sulfide (H₂S) reacts with iron hydroxide (Fe(OH)₃) particles generated during the denitrification process and is regenerated as the Fe₂S₃, the FeS, and the FeS₂ particles to be utilized, and thus, not only is the decrease in the alkalinity sufficiently alleviated, but it also has the effect of continuously supplying raw materials for the denitrification, so that there is an advantage in that the denitrification efficiency is maintained for a longer time.

In particular, since the iron sulfide particles regenerated from the reaction of the iron hydroxide (Fe(OH)₃) particles and H₂S are used for the denitrification reaction, the additional dose of the electron donors is minimized.

In the related art, during the denitrification process by the sulfur oxidizing denitrifying bacteria, since the sulfur which is an electron donor is depleted as time goes by or the hydrogen ions (H⁺) generated by the denitrification reaction are accumulated, resulting in a decrease in pH and alkalinity. In order to solve these problems, the sulfur which is an electron donor is periodically added or limestone is added to replenish the alkalinity.

In contrast, in the electron donor cyclic sulfur denitrification agent of the present invention, since the sulfur which is an electron donor is supplied cyclically through different denitrification reactions, it has an advantage in that the denitrification is enabled for a long time by minimizing additional replenishment of electron donors.

In addition, since the electron donor cyclic sulfur denitrification agent of the present invention is circulated in such a way that the hydrogen ion (H⁺) generated in the denitrification reaction is reused in other reactions. There is an advantage in that continuous denitrification is enabled without replenishing the alkalinity. Additionally, the Fe(OH)₃ generated during the reaction process also has the effect of preventing a decrease in pH and alkalinity.

Any one iron sulfide particles or a mixture of two or more iron sulfide particles selected from a group of the iron sulfide particles including the Fe₂S₃ particles, the FeS particles, and the FeS₂ particles of the present invention can be used as general iron sulfide (Fe₂S₃, FeS, and FeS₂) particles, and however, preferably, the waste of desulfurization adsorbent discarded after removing the hydrogen sulfide can be used.

The iron hydroxide (Fe(OH)₃) particles of the present invention can be used as general iron hydroxide (Fe(OH)₃) particles, and after the iron compound adsorbent for desulfurization (Fe(OH)₃) adsorbs the hydrogen sulfide (H₂S), the iron hydroxide may be unreacted iron hydroxide (Fe(OH)₃) remaining in the waste desulfurization adsorbent that is discarded after processing. In this case, it has the advantage of suppressing emissions by reacting with hydrogen sulfide generated within the column at the beginning of denitrification.

The sulfur oxidizing denitrifying bacteria of the present invention are attached to the sulfur (S°) particles; and any one iron sulfide particles or a mixture of two or more iron sulfide particles selected from a group of the iron sulfide particles including the Fe₂S₃ particles, the FeS particles, and the FeS₂ particles can grow, and the sulfur components are oxidized to form the sulfate ions. There is a characteristic in that the sulfate reducing bacteria are one or two or more microorganisms selected from the genus Thiobacillus microorganisms.

The operating mechanism of the electron donor cyclic sulfur denitrification agent of the present invention is explained as follows.

There is a characteristic in that the sulfur (S°) particles of the present invention are converted to the sulfate ions (SO₄²⁻) in the process of decomposing the nitrate ions (NO₃⁻) into the nitrogen gas (N₂) by the sulfur oxidizing denitrifying bacteria using as the electron donors ((refer to Chemical Formula 1); the sulfate ion (SO₄²⁻) is converted to the hydrogen sulfide (H₂S) by the sulfate reducing bacteria (refer to Chemical Formula 8); the hydrogen sulfide (H₂S) reacts with the iron hydroxide (Fe(OH)₃) particles to be converted to the sulfur (S°) particles and the FeS particles (refer to Chemical Formula 10); the sulfur (S°) particles and the FeS particles react to be converted to the FeS₂ particles (refer to Chemical Formula 11); the sulfur (S°) particles, the FeS particles, and the FeS₂ particles generate electrons in the process of decomposing the nitrate ions (NO₃⁻) into the nitrogen gas (N₂) by the sulfur oxidizing denitrifying bacteria used as the electron donors (refer to Chemical Formula 1, 4, 5, and 6) .

There is a characteristic in that any one iron sulfide particle or a mixture of two or more iron sulfide particles selected from a group of the iron sulfide particles including the FeS particles and the FeS₂ particles (including the FeS particles or the FeS₂ particles converted from the Fe₂S₃ particles) of the present invention is converted to the sulfate ions (SO₄²⁻) and the iron hydroxide (Fe(OH)₃) particles in the process of decomposing the nitrate ions (NO₃⁻) into the nitrogen gas (N₂) by the sulfur oxidizing denitrifying bacteria used as an electron donor (refer to Chemical Formula 4 to 7).

The sulfate ion (SO₄²⁻) is decomposed into the sulfur ion (HS⁻) by the sulfate reducing bacteria and then converted to the hydrogen sulfide (H₂S) (refer to Chemical Formula 8 and 9); The hydrogen sulfide (H₂S) reacts with the iron hydroxide (Fe(OH)₃) particles to be converted to the sulfur (S°) particles and the FeS particles (refer to Chemical Formula 10); the sulfur (S°) particles and the FeS particles react to be converted to the FeS₂ particles (refer to Chemical Formula 11); the sulfur (S°) particles, the FeS particles, and the FeS2 particles are used as the electron donors in the process of decomposing nitrate ions (NO₃⁻) into the nitrogen gas (N₂) by the sulfur oxidizing denitrifying bacteria (refer to Chemical Formula 1, 4, 5, and 6) .

There is a characteristic in that, with respect to the hydrogen ion (H⁺) generated in the process (refer to Chemical Formula 1) of decomposing the nitrate ions (NO₃⁻) into the nitrogen gas (N₂) by the sulfur oxidizing denitrifying bacteria of the present invention using the sulfur (S°) particles as an electron donor, since the hydrogen ions (H⁺) are consumed in the process of decomposing the nitrate ions (NO₃⁻) into the nitrogen gas (N₂) (refer to Chemical Formula 6) by the sulfur oxidizing denitrifying bacteria using the FeS₂ particles as an electron donor, so that a decrease in alkalinity is alleviated. Additionally, the Fe(OH)₃ generated during the process oft he sulfur oxidizing denitrifying bacteria denitrifying the FeS2 particles as the electron donors has the effect of preventing a decrease in pH and a decrease in alkalinity (refer to Chemical Formula 12 and 13).

[Chemical Formula 12] FeS₂+3NO₃⁻+2H₂O→Fe(OH)₃+1.5N₂+2SO₄²⁻

[Chemical Formula 13] Fe(OH)₃ + H_{2O} → Fe³⁺ + 3OH⁻

The present invention provides a method for manufacturing an electron donor cyclic sulfur denitrification agent including the following steps:
Any one iron sulfide particles or a mixture of two or more iron sulfide particles selected from a group of the iron sulfide particles including the Fe2S3 particles, the FeS particles, and the FeS2 particles;
A first step of generating any one iron sulfide particles or a mixture of two or more iron sulfide particles selected from a group of the iron sulfide particles including the Fe₂S₃ particles, the FeS particles, and the FeS₂ particles; and a mixture of iron compound particles containing iron hydroxide (Fe(OH)₃) particles;
a second step of mixing the sulfur (S°) particles and a mixture of iron compound particles to generate a mixture of sulfur (S°)-iron compound particles; and
a third step of generating an electron donor cyclic sulfur denitrification agent by inoculating a mixture of sulfur (S°)-iron compound particles with the sulfur oxidizing denitrifying bacteria and the sulfate reducing bacteria.

The sulfur (S⁰)-iron compound particle mixture can be immobilized into a type of pellet using a binder, or the sulfur particles and a mixture of iron compound particles pellets can be mixed and filled into a water treatment column.

Since the iron sulfide particle mixture and a mixture of iron compound particles are circulated by H2S generated by the sulfate reducing bacteria, one or both of the iron sulfide particle mixture and a mixture of iron compound particles can be included.

There is a characteristic in that, with respect to a mixture of sulfur (S°)-iron compound particles, the sulfur (S°) particles and a mixture of iron compound particles are mixed at a weight ratio of 0.5 to 5 : 1.
The weight ratio can be determined based on the concentration and the alkalinity of the water, and the influent nitrate concentration is outside an appropriate concentration range, denitrification may not occur properly, and the alkalinity may need to be added.

There is a characteristic in that the inoculation of the sulfur oxidizing denitrifying bacteria and the sulfate reducing bacteria use any one or two mixtures selected from a group including aerobic and anaerobic sludge in the sewage treatment plant, and soil microorganisms.

The present invention provides a column for water treatment filled with the electron donor cyclic sulfur denitrification agent described above. There is a characteristic in that column is of an upward-flowing type, and contaminated water is supplied from the bottom, and when it remains for a certain period of time, denitrification is achieved by an electron donor cyclic sulfur denitrification agent, and the treated water is discharged from the top.

The electron donor cyclic sulfur denitrification agent may be filled with a mixture of sulfur (S⁰)-iron compound particles, a mixture of iron compound particles is located at the bottom, middle, or top of the column, and the remaining portion can be filled with the sulfur (S°) particles.

If a mixture of iron compound particles is located at the bottom or middle, it has a great effect in terms of the alkalinity supply;
When a mixture of iron compound particles is located at the top, it has an advantageous effect in suppressing the outflow of the hydrogen sulfide (H₂S).

The present invention will be described in detail below through examples.

### Example

### Example: Preparation of sulfur denitrification agent column

In the present invention, as Example, an electron donor cyclic sulfur denitrification agent is generated including the sulfur (S₀) particles; any one iron sulfide particles or a mixture of two or more iron sulfide particles selected from a group of the iron sulfide particles including the Fe₂S₃ particles, the FeS particles, and the FeS₂ particles; iron hydroxide (Fe(OH)₃) particles; the sulfur oxidizing denitrifying bacteria; and sulfate reducing bacteria, and is filled into an upflow type column to generate a sulfur denitrification agent column (refer to Fig. 1).

The electron donor cyclic sulfur denitrification agent of the present invention is manufactured by obtaining the waste desulfurization adsorbent, which is discarded after the iron compound adsorbent (Fe(OH)₃) adsorbs the hydrogen sulfide (H₂S), turning the waste desulfurization adsorbent into particles, and mixing these particles with the sulfur (S°) particles to generate the sulfur (S°) particle-waste desulfurization adsorbent particle mixture, and injecting inoculum source of the sulfur oxidizing denitrifying bacteria and the sulfate reducing bacteria into the sulfur (S°) particle-waste desulfurization adsorbent particle mixture.

The sulfur (S°) particle-waste desulfurization adsorbent particle mixture further includes any one binder selected from a group including silica sol, modified silicate, clay, and bentonite, or a mixture thereof as a binder and can be manufactured in a pellet form, and the sulfur (S°) particle-waste desulfurization adsorbent particle mixture can be manufactured in a pellet form by injecting the inoculum source before or after the binder is further added.

The sulfur (S°) particles with a particle size of 0.5 to 2 mm are selected to be used; and The waste desulfurization adsorbent particles are prepared by obtaining and then granulating the waste desulfurization adsorbent discarded after removing the hydrogen sulfide by using the iron compound adsorbent (Fe(OH)₃) in a sewage treatment plant or the waste desulfurization adsorbent discarded after removing the hydrogen sulfide by using the waste sludge (Fe(OH)₃) obtained after purification by adding the calcium hydroxide (Ca(OH)₂) in acid mine wastewater discharged from a mine. The waste desulfurization adsorbent particles are in a mixed state of iron sulfide particles containing the Fe₂S₃, the FeS, and the FeS₂ and unreacted iron hydroxide (Fe(OH)₃) particles.

Return sludge from a sewage treatment plant and anaerobic tank sludge are used as inoculum sources for the sulfur oxidizing denitrifying bacteria and the sulfate reducing bacteria. The sludge is used after pre-culturing in a batch manner by using 1 ml each of returned sludge and anaerobic tank sludge from a sewage treatment plant in Chuncheon, Gangwon-do as inoculum sources.

The sulfur (S°) particle-waste desulfurization adsorbent particle mixture is filled in a plastic upflow type column with the sulfur particles (S°) and the waste desulfurization adsorbent particles having an internal volume of 250 ml at a volume ratio of 1 : 1.

As a comparative example, the sulfur denitrification agent column (Comparative Example 1) is manufactured by filling only the sulfur particles in an upflow type column, and as another comparative example, the sulfur denitrification agent column (Comparative Example 2) is manufactured by filling only the waste desulfurization adsorbent particles in an upflow type column.

### Experimental Example 1: Nitrogen content analysis of sulfur denitrification agent column the effluent water

Through a peristatic pump at the bottom of the column of the generated Example (sulfur (S°) particle-waste desulfurization adsorbent particle mixture), Comparative Example 1 (sulfur (S°) particles), or Comparative Example 2 (waste desulfurization adsorbent particles), using KNO₃ as artificial water diluted 10 times of the standard solution of KH₂PO₄ 3.75 g/L, NaHPO₄ 0.75 g/L, NH₄Cl 0.1 g/L, MgSO₄·7H₂O 0.05 g/L, Na₂CO₃ 0.25 g/L, and Trace mineral solution 5 mℓ/l, the artificial effluent water containing 40 mg/l of the nitrate nitrogen (NO₃⁻-N) is injected, and while varying the empty bed contact time (EBCT) to 16, 8, 4, and 2 hours, the change in nitrate nitrogen concentration in the effluent water after the operation is analyzed. The analysis of changes in nitrate nitrogen concentration is performed by using ion chromatography. For ion chromatography analysis, a Metrosep A Supp 5 - 150/4.0 column is used on Metrohm Advanced Compact IC, and a degassed carbonate mobile phase (Na₂CO₃+NaHCO₃) is used as the mobile phase. To generate the high concentration of ionic substances remaining in the effluent water, a sample for analysis is generated by filtering the ionic substances through a syringe filter (0.45 gm) and diluting these substances 10 times with tertiary distilled water.

Fig. 2 illustrates the results of measuring the nitrate nitrogen concentration in the effluent water from the sulfur denitrification agent column of the present invention. Panel A) of Fig. 2 illustrates the results of analyzing the nitrate nitrogen concentration in the effluent water. Experimental results of Comparative Example 1 illustrates that the nitrate nitrogen (NO)₃⁻-N) in the effluent water is is gradually decreased at 16 hours after the EBCT, but the residual nitrate nitrogen concentration in the effluent water is increased after 8 hours of the EBCT. Also, the hydrogen sulfide inside the reaction tank smells. Comparative Example 2 illustrates that stable efficiency with a nitrate nitrogen concentration of 0 mg/L from the beginning of 16 hours of the EBCT until 8 hours of the EBCT, but the nitrate nitrogen concentration in the effluent water is is gradually increased from 4 hours of the EBCT, and a similar pattern to Comparative Example 1 is illustrated. This is a phenomenon that occurs due to depletion of sulfur in Comparative Example 2 in which waste desulfurization adsorbent is used alone. In the case of the example, in the case of 16 hours of the EBCT, some nitrate nitrogen leak due to low microbial activity during the first 4 days of operation, but it is confirmed that the nitrate nitrogen concentration in the effluent water is maintained at 0 mg/L even when the EBCT is reduced to 8, 4, and 2 hours. In the example, when the waste desulfurization agent and the sulfur particles are mixed, the alkalinity is replenished during the denitrification, and the pH is maintained in a neutral range, so that a 100% nitrate nitrogen removal rate is illustrated. Additionally, there is no foul odor caused by the hydrogen sulfide (H2S) inside the column due to the circulation of the electron donor during the operation period.

Panel B) of Fig. 2 illustrates the results of analyzing the nitrite nitrogen (NO₂⁻-N) concentration in the effluent water. Experimental results of Comparative Example 1 illustrates that the nitrate nitrogen concentration is increased from 16 hours to 8 hours after the EBCT, which is accumulated to about 20 mg/L after 4 hours of the EBCT. In Comparative Example 2, the nitrate nitrogen concentration is maintained at 0 mg/L until 8 hours after the EBCT, and it is confirmed that the nitrate nitrogen concentration is increased thereafter. This is the same phenomenon as the result of the nitrate nitrogen and is a phenomenon that occurs due to the sulfur depletion of the waste desulfurization adsorbent. In contrast, in the example, it is confirmed that the nitrate nitrogen concentration in the effluent water is maintained at 0 mg/L until 2 hours after the EBCT. This also contains a mixture of the waste desulfurization agent and the sulfur particles, and thus, the alkalinity is replenished during the denitrification, and the pH is maintained in a neutral range, so that a 100% nitrate nitrogen removal rate is illustrated. During the operation period, there is no foul odor caused by the generation of the hydrogen sulfide (H₂S) due to the circulation of the electron donor.

Panel C) of Fig. 2 illustrates the results of analyzing the total nitrogen (Total N, or N) removal rate (%) in the effluent water. Experimental results of Comparative Example 1 illustrates that it is confirmed that the total nitrogen removal rate is gradually increased at 16 hours of the EBCT and then is decreased thereafter. In Comparative Example 2, it is confirmed that the total nitrogen removal rate is increased from the initial 16 hours of the EBCT, remained at 100%, and then is decreased after 4 hours of the EBCT. In contrast, in the example, it is confirmed that the total nitrogen removal rate is maintained at 100% from the beginning of 16 hours of the EBCT until the end of the experiment due to denitrification by the sulfur particles, caused by circulation of electron donors and and replenishment of the alkalinity due to generation of the hydrogen sulfide.

The nitrogen removal effect of the above-mentioned example is sulfur (S°) particles, waste desulfurization adsorbent (any one iron sulfide particles or a mixture of two or more iron sulfide particles selected from a group of the iron sulfide particles including the Fe₂S₃ particles, the FeS particles, and the FeS₂ particles); and the iron hydroxide (Fe(OH)₃) particles), the sulfur oxidizing denitrifying bacteria, and the sulfate reducing bacteria in the column by circulating reactants (refer to Chemical Formulas 4 to 7).

Examples include the sulfur (S°) particles, the waste desulfurization adsorbent, sulfur oxidizing denitrifying bacteria, and the sulfate reducing bacteria. First, when the effluent water is injected in the example, the nitrate ions (NO₃⁻) existing in the effluent water are denitrified by participating the denitrification reaction performed by the sulfur oxidizing denitrifying bacteria using the sulfur (S°) particles and the sulfur compound particles of the waste desulfurization adsorbent as the electron donors.

First, when the effluent water is injected in the example, the nitrate ions (NO₃⁻) existing in the effluent water are denitrified by participating the denitrification reaction performed by the sulfur oxidizing denitrifying bacteria using the sulfur (S°) particles and the sulfur compound particles of the waste desulfurization adsorbent as the electron donors. First, the nitrate ions (NO₃⁻) are decomposed into the nitrogen gas (N₂) (refer to Chemical Formula 1, 4 to 7).

A portion of the sulfate ion (SO₄²⁻), a by-product generated in the denitrification process, is converted to the sulfur ion (HS⁻) by the sulfate reducing bacteria (refer to Chemical Formula 8.

The sulfur ion (HS⁻) reacts with the hydrogen ion (H⁺) to be converted to the hydrogen sulfide (H₂S) (refer to Chemical Formula 9).

The hydrogen sulfide (H₂S) reacts with the iron hydroxide (Fe(OH)₃) particles (refer to Chemical Formula 4 to 7) generated from the denitrification reaction is performed by using the unreacted iron hydroxide (Fe(OH)₃) particles of the waste desulfurization adsorbent and the sulfur oxidizing denitrifying bacteria using iron sulfide (Fe₂S₃, FeS, or FeS₂) particles as the electron donors to generate the iron sulfide (FeS) and the sulfur (S°); particles (refer to Chemical Formula 10); the generated iron sulfide (FeS) and the sulfur (S°) particles generate iron sulfide (FeS₂) (refer to Chemical Formula 11); the generated iron sulfide (FeS and FeS₂) is used in the denitrification reaction (refer to Chemical Formula 4 to 6) by the sulfur oxidizing denitrifying bacteria, and the sulfur which is an electron donor is circulated.

In addition, there is a characteristic in that, since the hydrogen ion (H⁺) generated in the denitrification reaction (refer to Chemical Formula 1) performed by using the sulfur (S°) particles as the electron donors and the denitrification reaction (refer to Chemical Formula 4, 5, and 7) performed by using the iron sulfide (Fe₂S₃, FeS, or FeS₂) particles as the electron donors is reused, in the reaction of the sulfur ion generation by the sulfate reducing bacteria and the hydrogen sulfide generation, a decrease in pH and alkalinity is alleviated. Additionally, unprecipitated the Fe(OH)₃ may be generated during the process of sulfur oxidizing denitrifying bacteria denitrification the FeS₂ particles as the electron donors.

The unprecipitated Fe(OH)₃ has an effect of blocking a decrease in pH and alkalinity (refer to Chemical Formula 12 and 13) .

As described above, in the electron donor cyclic sulfur denitrification agent column (example) of the present invention, since the reactants for nitrogen removal from the effluent water are used cyclically through an internal reactions, reducing the consumption of the electron donors, consumption of the alkalinity and a decrease the in pH is minimized, allowing the nitrogen removal rate to be maintained at 100% even after 26 days of operation (refer to panel C) of Fig. 2).

### Experimental Example 2: Analysis of sulfate and electrical conductivity of sulfur denitrification agent column the effluent water.

Through a peristatic pump at the bottom of the column of the generated Example (sulfur (S°) particle-waste desulfurization adsorbent particle mixture), Comparative Example 1 (sulfur (S°) particles), or Comparative Example 2 (waste desulfurization adsorbent particles). 40 mg/l of the aqueous solution (effluent water) of the nitrate nitrogen (NO₃⁻-N) is injected, and while varying the empty bed contact time (EBCT), the concentration of the sulfate ion (SO₄²⁻) and the electrical conductivity after the operation are analyzed. The analysis of the change in concentration of the sulfate ion (SO₄²⁻) is performed by using ion chromatography analysis, and the analysis of the change in electrical conductivity is measured and performed by using an electrical conductivity electrode.

Fig. 3 illustrates the results of measuring the concentration of sulfate ion (SO₄²⁻) in the effluent water from the sulfur denitrification agent column of the present invention.

Experimental results of Comparative Example 1 illustrates that, as the EBCT is decreased from 16 hours to 2 hours, the concentration of the sulfate ion (SO₄²⁻) is slightly increased as the sulfur (S°) particles remove the nitrate nitrogen (NO₃⁻-N), and then, it is confirmed that, after 4 hours of the EBCT, the denitrification efficiency is decreased and no longer is increased. In Comparative Example 2, it is confirmed that the concentration of the sulfate ion (SO₄²⁻) is maintained at a high level until 16 hours after the EBCT due to the sulfate ion (SO₄²⁻) contained in the waste desulfurization adsorbent, but then is decreased rapidly, and from 2 hours after the EBCT, the concentration of the sulfate ion (SO₄²⁻) remains constant.

In contrast, in the case of the example, the concentration of sulfate (SO₄²⁻) is decreased rapidly as the EBCT is decreased, but then is increased after 8 hours of the EBCT and is confirmed to be maintained. It is confirmed that, in Comparative Example 2, the sulfate ion (SO₄²⁻) contained in the waste desulfurization agent is rapidly depleted as is dissolved, and the denitrification rate fell, so that the sulfate concentration became low and constant from 4 hours after the EBCT, and in the example, the denitrification efficiency is high, and as the sulfate ion is generated, the sulfate concentration is constant becomes higher than that of Comparative Example 2.

### Experimental Example 3: pH and the alkalinity analysis of sulfur denitrification column the effluent water.

Through a peristatic pump at the bottom of the column of the generated Example (sulfur (S°) particle-waste desulfurization adsorbent particle mixture), Comparative Example 1 (sulfur (S°) particles), or Comparative Example 2 (waste desulfurization adsorbent particles). 40 mg/l of the aqueous solution (effluent water) of the nitrate nitrogen (NO)₃⁻-N) is injected, and while varying the empty bed contact time (EBCT), the pH and the alkalinity in the effluent water after the operation are analyzed. The pH analysis is performed by using a pH electrode, and the alkalinity analysis is performed based on a standard method 2320B (trimetric method).

Fig. 4 illustrates the results of measuring the pH and the alkalinity in the effluent water from the sulfur denitrification agent column of the present invention. Panel A) of Fig. 4 illustrates the results of measuring the pH in the effluent water. Experimental results of Comparative Example 1 illustrate that as the EBCT is decreased from 16 hours to 2 hours, the sulfur (S°) particles react with the nitrate nitrogen (NO)₃⁻-N) to generate the hydrogen ions (H⁺), so that it is confirmed that the pH is decreased, as the pH is decreased, the treatment efficiency of the nitrate nitrogen is decreased (refer to panel C) of Fig. 2). In Comparative Example 2, as the EBCT is decreased, the pH is maintained at about 8 with the alkalinity component contained in the waste desulfurization adsorbent, and when the EBCT is shortened to 4 hours, the denitrification efficiency is decreased and a decrease in pH is not seen.

In the example, it is confirmed that the pH is not is decreased but remains at a is increased state until 8 hours after the EBCT, and then the pH is stepwise is decreased after 8 hours after the EBCT. The above-mentioned results illustrate that the inflow rate is faster at 4 hours of the EBCT, and the high denitrification is achieved by the sulfur particles and the waste desulfurization adsorbent (any one iron sulfate particle or a mixture of two or more iron sulfide particles selected from a group of the iron sulfide particles including the Fe₂S₃, the FeS, and the FeS₂), and it is confirmed that this is a phenomenon caused by the destruction of the alkalinity.

Panel B) of Fig. 4 illustrates the results of measuring the alkalinity in the effluent water. Experimental results of Comparative Example 1 illustrate that as the EBCT is decreased from 16 hours to 2 hours, the sulfur particles (S°) react with the nitrate nitrogen (NO)₃⁻-N) to generate the hydrogen ions (H⁺), so that it is confirmed that the pH is decreased, resulting in the alkalinity to be is decreased. In Comparative Example 2, it is confirmed that the alkalinity is increased as the EBCT is decreased. It is determined that the alkalinity is increased while denitrification occurs by waste desulfurization adsorbent (one or more of the Fe₂S₃, the FeS, and the FeS₂).

In the example, it is confirmed that the alkalinity is increased up to 8 hours after the EBCT and then is decreased after 8 hours of the EBCT. This is confirmed to be the same phenomenon as the pH result in panel A).

The specific embodiments described in the present specification are meant to represent preferred embodiments or examples of the present invention, and are not intended to limit the scope of the present invention. It will be apparent to those skilled in the art that modifications and other uses of the present invention do not depart from the scope of the invention as set forth in the claims herein.

## Claims

1. An electron donor cyclic sulfur denitrification agent comprising:
sulfur (S°) particles;
any one iron sulfide particles or a mixture of two or more iron sulfide particles selected from a group of iron sulfide particles including Fe₂S₃ particles, FeS particles, and FeS₂ particles;
iron hydroxide (Fe(OH)₃) particles;
sulfur oxidizing denitrifying bacteria; and
sulfate reducing bacteria.

2. The electron donor cyclic sulfur denitrification agent according to claim 1,
wherein the sulfur (S°) particles are used as electron donors in a process where sulfur oxidizing denitrifying bacteria decompose nitrate ions (NO₃⁻) into nitrogen gas (N₂) to be converted to sulfate ions (SO₄²⁻);
wherein the sulfate ion (SO₄²⁻) is converted to the hydrogen sulfide (H₂S) by the sulfate reducing bacteria;
wherein hydrogen sulfide (H₂S) reacts with the iron hydroxide (Fe(OH)₃) particles to be converted to the sulfur (S°) particles and the FeS particles;
wherein the sulfur (S°) particles and the FeS particles react to be converted to the FeS₂ particles ;and
wherein the sulfur (S°) particles, the FeS particles, and the FeS₂ particles are used as the electron donors in a process of decomposing the nitrate ions (NO₃⁻) into the nitrogen gas (N₂) by the sulfur oxidizing denitrifying bacteria.

3. The electron donor cyclic sulfur denitrification agent according to claim 1,
wherein the Fe₂S₃ particles are converted to the FeS particles or the FeS₂ particles, and any one iron sulfide particles or a mixture of iron sulfide particles selected from a group of the iron sulfide particles including the converted FeS particles and the FeS₂ particles are used as the electron donors in a process of decomposing the nitrate ions (NO₃⁻) into the nitrogen gas (N₂) by the sulfur oxidizing denitrifying bacteria to be converted to the sulfate ions (SO₄²⁻) and the iron hydroxide (Fe(OH)₃) particles;
wherein the sulfate ion (SO₄²⁻) is decomposed into the sulfur ion (HS⁻) by the sulfate reducing bacteria and then converted to the hydrogen sulfide (H₂S);
wherein the hydrogen sulfide (H₂S) reacts with the iron hydroxide (Fe(OH)₃) particles to be converted to the sulfur (S°) particles and the FeS particles;
wherein the sulfur (S°) particles and the FeS particles react to be converted to the FeS₂ particles; and
wherein the sulfur (S°) particles, the FeS particles, and the FeS₂ particles are used as the electron donors in the process where the sulfur oxidizing denitrifying bacteria decompose the nitrate ions (NO₃⁻) into the nitrogen gas (N₂).

4. The electron donor cyclic sulfur denitrification agent according to claim 1,
wherein any one iron sulfide particle or a mixture of two or more iron sulfide particles selected from a group of the iron sulfide particles including the FeS particles and the FeS₂ particles are used as the electron donors in a process of decomposing the nitrate ions (NO₃⁻) into the nitrogen gas (N₂) by the sulfur oxidizing denitrifying bacteria to be converted to the sulfate ion (SO₄²⁻) and the iron hydroxide (Fe(OH)₃) particles;
wherein the sulfate ion (SO₄²⁻) is decomposed into the sulfur ion (HS⁻) by the sulfate reducing bacteria and then converted to the hydrogen sulfide (H₂S);
wherein the hydrogen sulfide (H₂S) reacts with the iron hydroxide (Fe(OH)₃) particles to be converted to the sulfur (S°) particles and the FeS particles;
wherein the sulfur (S°) particles and the FeS particles react to be converted to the FeS₂ particles; and
wherein the sulfur (S°) particles, the FeS particles, and the FeS₂ particles are used as the electron donors in the process where the sulfur oxidizing denitrifying bacteria decompose the nitrate ions (NO₃⁻) into the nitrogen gas (N₂).

5. The electron donor cyclic sulfur denitrification agent according to claim 1, wherein, with respect to the hydrogen ions (H⁺) generated in a process of decomposing the nitrate ions (NO₃⁻) into the nitrogen gas (N₂) by using the sulfur (S°) particles as an electron donor, by consumption of the hydrogen ions (H⁺) in a process of decomposing the nitrate ions (NO₃⁻) into the nitrogen gas (N₂) by the sulfur oxidizing denitrifying bacteria using the FeS₂ particles as the electron donors or by iron hydroxide (Fe(OH)₃) particles generated in a process of denitrifying by the sulfur oxidizing denitrifying bacteria using the FeS₂ particles as an electron donor, a decrease in pH and alkalinity is alleviated.

6. The electron donor cyclic sulfur denitrification agent according to claim 1,
wherein the sulfur (S°) particles; any one iron sulfide particles or a mixture of two or more iron sulfide particles selected from a group of the iron sulfide particles including the Fe₂S₃ particles, the FeS particles, and the FeS₂ particles; and the iron hydroxide (Fe(OH)₃) particles are mixed with a binder to be generated in a pellet form.

7. A water treatment column filled with the electron donor cyclic sulfur denitrification agent according to any one of claims 1 to 6.

8. The water treatment column according to claim 7, wherein the column is of an upflow type.

9. A method of manufacturing an electron donor cyclic sulfur denitrification agent comprising:
a first step of generating any one iron sulfide particles or a mixture of two or more iron sulfide particles selected from a group of the iron sulfide particles including the Fe₂S₃ particles, the FeS particles, and the FeS₂ particles;
and a mixture of iron compound particles containing iron hydroxide (Fe(OH)₃) particles; and
a second step of generating a mixture of sulfur (S°)-iron compound particles by mixing the sulfur (S°) particles and the iron compound particles mixtures;
and
a third step of generating the electron donor cyclic sulfur denitrification agent by inoculating the sulfur oxidizing denitrifying bacteria and the sulfate reducing bacteria to a mixture of sulfur (S⁰)-iron compound particles.

10. The method of manufacturing the electron donor cyclic sulfur denitrification agent according to claim 9, wherein, with respect to a mixture of sulfur (S⁰)-iron compound particles, the sulfur (S°) particles and the iron compound particle mixture are mixed at a weight ratio of 0.5 to 5 . 1.

11. The method of manufacturing the electron donor cyclic sulfur denitrification agent according to claim 9, wherein inoculation of the sulfur oxidizing denitrifying bacteria and the sulfate reducing bacteria use any one or two mixtures selected from a group including aerobic sludge in a sewage treatment plant, basic sludge and soil microorganisms in the sewage treatment plant.
